# EUROPÄISCHE PATENTSCHRIFT

(11) **EP 1 852 011 B1**
(45) Veröffentlichungstag und Bekanntmachung des Hinweises auf die Patenterteilung: **14.10.2009**
(21) Anmeldenummer: 07008279.7
(22) Anmeldetag: 24.04.2007
(51) Int. Cl.: A01F 29/20

(54) **Selbstfahrender Feldhäcksler**
Self-propelled chaff cutter
Ramasseuse-hacheuse automobile

(30) Priorität: 03.05.2006 DE 102006020790
(43) Veröffentlichungstag der Anmeldung: 07.11.2007
(73) Patentinhaber: Maschinenfabrik Bernard Krone GmbH, 48480 Spelle (DE)
(72) Erfinder: Krone, Bernard, 48480 Spelle (DE); Horstmann, Josef, 49479 Ibbenbüren (DE)

(56) Entgegenhaltungen:
- DE-A1- 2 445 702
- DE-A1- 3 919 055
- DE-A1- 19 652 656

## Beschreibung

Die Erfindung bezieht sich auf einen selbstfahrenden Feldhäcksler zum Häckseln von Gras, Mais oder dgl. Erntegüter nach dem Oberbegriff des Patentanspruchs 1.

Ein derartiger Feldhäcksler ist beispielsweise aus der DE 39 19 055 A1 bekannt und weist ein Häckselaggregat auf, das eine mit Messern besetzte und in einem Trommelgehäuse untergebrachte Messertrommel umfasst, wobei die Messertrommel zur Zerkleinerung des Erntegutes mit einer Gegenschneide zusammenwirkt. Unterhalb der Messertrommel in einem Bereich zwischen der Gegenschneide und einem Auswurfkanal ist dem Trommelgehäuse ein Bodenblech zugeordnet, welches an dem der Gegenschneide zugewandten Ende mit dem Sattel der Gegenschneide verbunden ist. Durch diese Zuordnung des Bodenblechs zur Gegenschneide erfolgt bei einer Verstellung des Abstandes zwischen der Gegenschneide und der Arbeitskreisfläche der Messer der Messertrommel auch eine Verstellung des Abstandes des der Gegenschneide zugewandten Endes des Bodenblechs zur Arbeitskreisfläche der Messer und zwar in radialer Richtung zur Arbeitskreisfläche der Messer. An dem der Gegenschneide abgewandten Ende des Bodenblechs ist jedoch in radialer Richtung zur Arbeitskreisfläche der Messer keine Veränderung des Abstandes zwischen dem Bodenblech und den Schneidmessern vorgesehen. Feldhäckslern nach diesem Stand der Technik sind mit dem Problem behaftet, dass bei größeren Erntegutdurchsätzen der Wirkungsgrad der Messertrommel hinsichtlich der Schnittleistung und der Förderleistung nachteilig beeinflusst wird, da das bereits gehäckselte Erntegut bei der Abgabe von der Messertrommel in den Auswurfkanal nicht vollständig abgegeben wird.

Auch die DE 24 45 702 A1 zeigt und beschreibt einen Feldhäcksler mit einer Häckseltrommel, bei der das Bodenblech hinsichtlich seiner Lage zur Häckseltrommel einstellbar ist. In einer Ausführungsform, in der aus schwenkbaren Platten 56 und diesen fest zugeordneten Anschlagplatten 64 sowie den Querstangen 66 und 68 ein Rahmenteil ausgebildet ist, ist diesem Rahmenteil ein Bodenblech zugeordnet. Zur Verstellung der Lage des Bodenblechs in Bezug zur Häckseltrommel ist es vorgesehen, dass das Rahmenteil zusammen mit dem Bodenblech um Schwenkzapfen 58 verschwenkbar ist, indem das Rahmenteil über Exzenterschrauben 62 näher zur Häckseltrommel zugestellt oder weiter von der Häckseltrommel weg bewegt werden kann. Hier ist also eine vom Bediener manuell einzuleitenden Zustellbewegung notwendig. Selbsttätig eingeleitete bzw. durchgeführte Zustellbewegungen des Bodenblechs dagegen sind in der DE 24 45 702 A1 nicht offenbart.

Aus der DE 196 52 656 A1 ist eine Verstellvorrichtung für ein Häckselaggregat eines Feldhäckslers offenbart, bei der ein kreisbogenförmiges und wannenartiges, die Häckseltrommel in einem unteren Bereich teilumhüllendes Bodenblech in Abhängigkeit von Zustellbewegungen der Gegenschneide in Bezug zum Umfangskreis der Messer der Häckseltrommel verstellbar ist. Hierbei ist es vorgesehen, dass der Abstand des Bodenblechs zum Umfangskreis der Messer der Häckseltrommel nicht nur in dem der Gegenschneide zugewandten Bereich sondern auch in dem der Gegenschneide abgewandten Bereich und zwar gleichzeitig verstellbar sein soll. Dazu ist das Bodenblech in dem der Gegenschneide zugewandten Bereich mit einer Lagerhülse verbunden, die ihrerseits auf einem Drehbolzen des Sattels der Gegenschneide gelagert ist, während das Bodenblech in dem der Gegenschneide abgewandten Bereich durch eine in radialer Richtung nicht nachgiebige Verstellhebelkinematik gehalten ist. In einer alternativen Ausführungsform der DE 196 52 656 A1 wird eine Aufnahme des Bodenblechs in dem der Gegenschneide zugewandten Bereich dadurch erreicht, dass das Bodenblech in diesem Bereich mit der Lagerhülse nicht verbunden ist, sondern auf dieser nur aufliegt, sodass dadurch eine schwimmende Lagerung des Bodenblechs in dem der Gegenschneide zugewandten Bereich erreicht werden kann. Zur Lösung des zuvor beschriebenen Problems einer unzureichenden

Übergabe des gehäckselten Erntegutes von der Häckseltrommel an den Auswurfkanal können die Erkenntnisse aus der DE 196 52 656 A1 jedoch auch nicht als Hilfestellung angesehen werden.

Der Erfindung liegt daher die Aufgabe zugrunde, einen selbstfahrenden Feldhäcksler der eingangs beschriebenen Art zu schaffen, dessen Schnitt- und Förderleistung an der Messertrommel optimiert ist.

Diese Aufgabe wird erfindungsgemäß durch die Merkmale des Patentanspruchs 1 gelöst. Hinsichtlich der weiteren Ausgestaltung der Erfindung wird auf die Patentansprüche 2 bis 11 verwiesen.

Gemäß der Erfindung ist es bei einem selbstfahrenden Feldhäcksler mit einer an ihrem Umfang mit Schneidmessern besetzten Messertrommel zum Häckseln von Gras, Mais oder dgl. Erntegüter, dessen Trommelgehäuse ein Bodenblech aufweist, welches in seiner Lage zur Arbeitskreisfläche der Schneidmesser veränderlich ausgebildet ist, vorgesehen, das Bodenblech bzw. die Zuordnung des Bodenblechs zum Trommelgehäuse so zu gestalten, dass das der Gegenschneide abgewandte Ende des Bodenblechs in radialer Richtung zur Arbeitskreisfläche der Schneidmesser federnd nachgiebig abgestützt ist. Unter dem Begriff Arbeitskreisfläche wird in diesem Zusammenhang die Fläche verstanden, die während der Rotation der Messertrommel von den Schneiden der Schneidmesser beschrieben wird. Dadurch wird es in vorteilhafter Weise ermöglicht, dass sich der Abstand zwischen dem Bodenblech und der Arbeitskreisfläche der Schneidmesser der Messertrommel in Abhängigkeit von dem von dem Feldhäcksler verarbeiteten jeweiligen Durchsatz an Erntegut selbsttätig verändern kann. Der erhöhte Druck größerer Massen des Erntegutes führt dazu, dass das Bodenblech entgegen der Wirkung der federnd nachgiebigen Stützkraft zurückweichen kann und sich somit der Spalt zwischen dem Bodenblech und der Arbeitskreisfläche der Schneidmesser vergrößert. Dadurch wird es ermöglicht, dass das Erntegut, bezogen auf die Abgabe an den Auswurfkanal früher aus den in Drehrichtung der Messertrommel vor den Schneidmessern gelegenen Förderzonen heraus gleiten kann und somit die Abgabe des Erntegutes von der Messertrommel an den Auswurfkanal wesentlich verbessert wird.

In einer vorteilhaften Ausführungsform der Erfindung ist es vorgesehen, das Bodenblech an seinem der Gegenschneide zugewandten Ende an einer Auflageeinrichtung zur Aufnahme der Gegenschneide zu haltern, bzw. schwenkbar zu lagern. Dadurch geht mit jeder Anpassung des Abstandes zwischen der Gegenschneide und der Arbeitskreisfläche der Schneidmesser auch selbsttätig eine Anpassung des Abstandes zwischen dem Bodenblech und den Schneidmessern einher.

Gemäß einer vorteilhaften Weiterbildung der Erfindung kann der Weg, den das Bodenblech an dem der Gegenschneide abgewandten Ende entgegen der federnd nachgiebigen Stützkraft beschreibt, begrenzt werden. In einer einfachen Ausführungsform kann diese Begrenzung durch das Erreichen der Blocklänge eines mechanischen Kraftspeichers festgelegt sein.

Zur Festlegung der Ausgangsstellung des Bodenblechs ist in einer Weiterbildung der Erfindung eine Anschlageinrichtung vorgesehen, die beispielsweise aus einer sich gegen das Trommelgehäuse abstützenden Stellschraube bestehen kann.

Zur Aufbringung der federnd nachgiebigen Stützkraft können mechanisch wirkende Kraftspeicher wie Zug- oder Druckfedern verwendet werden. Es ist aber auch vorstellbar zu diesem Zweck, Tellerfedern einzusetzen, die zu einem Federpaket aufgeschichtet sind.

In einer weiteren denkbaren Ausführungsform kann es vorgesehen sein, zur Erzeugung der federnd nachgiebigen Stützkräfte hydraulische Kraftspeicher einzusetzen. Diese können dann beispielsweise vom Fahrerstand des Feldhäckslers fernbedienbar bezüglich der Größe der Stützkraft eingestellt werden. Hierzu kann außerdem eine elektronische Steuereinrichtung vorgesehen sein, die dann den Einstellprozess bei der Regulierung der Größe der Stützkraft in Abhängigkeit von durch die Steuereinrichtung gemessenen Erntegutparametern vornimmt. Eine denkbarer Parameter zur Bestimmung der geeigneten Stützkraft kann in der Größe des durch den Feldhäcksler verarbeiteten Durchsatzes des landwirtschaftlichen Erntegutes gesehen werden.

Weitere Merkmale und Vorteile der Erfindung ergeben sich aus den Patentansprüchen und der nachstehenden Beschreibung in Verbindung mit der Zeichnung, in der ein Ausführungsbeispiel des Gegenstands der Erfindung veranschaulicht ist.

In der Zeichnung zeigt:
- **Fig. 1**: eine Seitenansicht eines erfindungsgemäßen selbstfahrenden Feldhäckslers;
- **Fig. 2**: eine schematische Darstellung einer in einem Trommelgehäuse untergebrachten Messertrommel nach den Merkmalen der Erfindung;

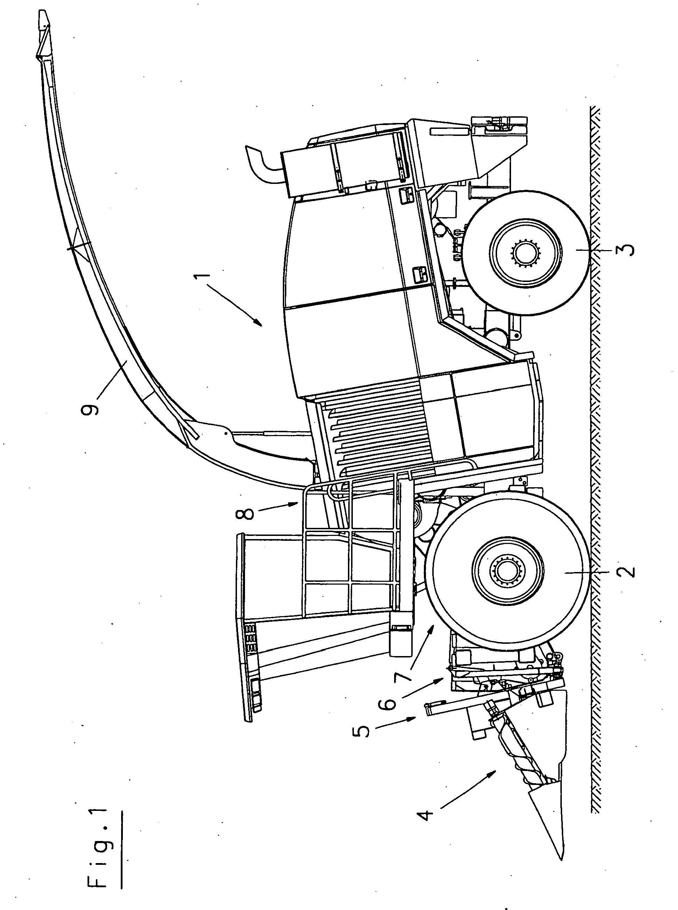

Der in Fig. 1 veranschaulichte selbstfahrende, sich über Antriebs- und über Lenkräder 2, 3 auf dem Boden abstützende Feldhäcksler 1 ist eine Erntemaschine zum Aufnehmen und Häckseln von Erntegut wie Gras, Mais oder dgl. Erntegüter. Für den jeweiligen Erntevorgang trägt der Feldhäcksler 1 frontseitig ein Vorsatzgerät 4, beispielsweise ein Maisgebiss, das an einer Adaptervorrichtung 5 angebracht ist, an die sich eine Einzugseinrichtung 6 mit nachfolgender Häckseleinrichtung 7 anschließt. Aus der Häckseleinrichtung 7 gelangt das gehäckselte Erntegut durch einen Auswurfkanal 8 zu einem Corn-Cracker, von dem das gehäckselte Erntegut mittels eines Auswurfbeschleunigers durch den Auswurfkrümmer 9 auf ein dem Abtransport dienendes Sammelfahrzeug übergeladen wird.

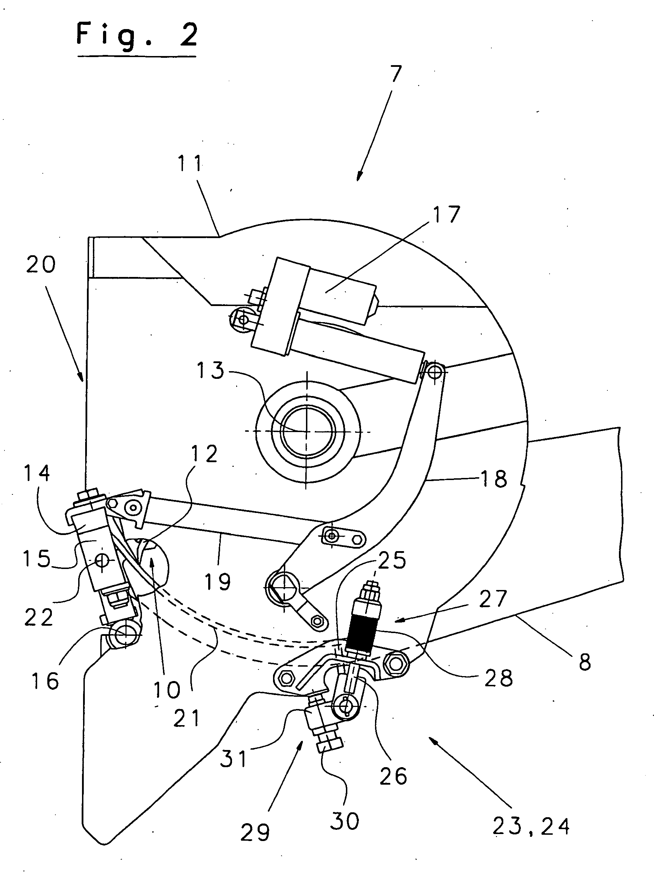

Fig. 2 zeigt in einer teilweise abgebrochenen Darstellung die Häckseleinrichtung 7, welche aus einer Messertrommel 10 gebildet ist, die in einem Trommelgehäuse 11 untergebracht ist. Zum Zerkleinern des Erntegutes ist die Messertrommel 10 mit an ihrem Umfang angebrachten Schneidmessern 12 versehen und um eine quer zur Fahrtrichtung des Feldhäckslers 1 ausgerichtete Rotationsachse 13 drehbar im Trommelgehäuse 11 gelagert. Beim Häckselvorgang wirken die Schneidmesser 10 mit einer Gegenschneide 14 zusammen, die auf einer schwenkbar am Trommelgehäuse 11 gehalterten Auflageeinrichtung 15 angeordnet ist. Durch einen Schwenkvorgang um eine quer zur Fahrtrichtung des Feldhäckslers 1 ausgerichtete Achse 16 kann die auf der Auflageeinrichtung 15 befestigte Gegenschneide 14 in ihrem Abstand zur Arbeitskreisfläche der Schneidmesser 12 so eingestellt werden, dass sich optimale Schnittleistungen der Schneidmesser 12 ergeben. Dieser Einstellvorgang wird durch ein Stellglied eingeleitet, welches im vorliegenden Ausführungsbeispiel ein elektrisch angetriebener Linearmotor ist, der über Hebel 18,19 auf die schwenkbare Auflageeinrichtung 15 der Gegenschneide 14 einwirkt. Zur Zuführung des Erntegutes weist die Häckseleinrichtung 7 in ihrem vorderen Bereich eine Öffnung 20 auf, durch die von der in Fig. 2 nicht dargestellten Einzugseinrichtung 6 der Häckseleinrichtung 7 das Erntegut zum Häckseln aufgegeben wird. Im hinteren Bereich schließt sich an das Trommelgehäuse 11 der Häckseleinrichtung 7 der Auswurfkanal 8 an, so dass das an der Gegenschneide 14 von den Schneidmessern 12 gehäckselte Erntegut im unteren Bereich des Trommelgehäuses 11 an der Kontur eines Bodenblechs 21 zum Auswurfkanal 8 geführt wird. Das gehäckselte Erntegut befindet sich dabei zumindest teilweise in den in Drehrichtung der Messertrommel 10 vor den Schneidmessern 12 befindlichen Förderzonen.

Wie aus Fig. 2 weiterhin hervorgeht, ist das Bodenblech an dem der Gegenschneide zugewandten Ende mit der Auflageeinrichtung 15 der Gegenschneide 14 verbunden. Im dargestellten Ausführungsbeispiel ist dies eine schwenkbare Verbindung, bei der das Bodenblech 21 um eine quer zur Fahrtrichtung des Feldhäckslers 1 verlaufende Achse 22 relativ zur Auflageeinrichtung 15 beweglich ist. An dem der Gegenschneide 14 abgewandten Ende des Bodenblechs 21 befindet sich eine federnd nachgiebige Abstützeinrichtung 23, die ein Zurückweichen des Bodenblechs 21 an seinem der Gegenschneide 14 abgewandten Ende in radialer Richtung der Arbeitskreisfläche der Schneidmesser 12 zulässt. Diese Abstützeinrichtung 23,24 besteht dazu aus einem mit dem Bodenblech 21 verbundenen Hebel 25, an dem eine Federzugstange 26 angreift. Die federnd nachgiebige Stützkraft der Abstützeinrichtung 23,24 wird aufgebracht durch einen Kraftspeicher 27, der im dargestellten Ausführungsbeispiel der Fig. 2 als ein aus Tellerfedern geschichtetes Federpaket 28 ausgebildet ist. Durch die oberhalb des Federpaketes 28 befindliche selbstsichernde Mutter 29 kann die Federkraft in ihrer Größe eingestellt werden.

Der Darstellung in Fig. 2 ist weiterhin zu entnehmen, dass der Abstützeinrichtung in Weiterbildung der Erfindung eine Anschlageinrichtung 29 zugeordnet ist, welche dazu dient, die Ausgangsstellung des Bodenblech d.h. den Minimalabstand zwischen dem Bodenblech 21 und der Arbeitskreisfläche der Schneidmesser 12 zu definieren. Diese Anschlageinrichtung kann in einer vorteilhaften Ausführungsform eine sich am Trommelgehäuse 11 abstützende Stellschraube 30 aufweisen, welche in eine an dem Hebel 25 angebrachte Halterung 31 eingesetzt ist.

In einer weiteren denkbaren Ausführungsform ist es vorstellbar, zur Erzeugung der federnd nachgiebigen Stützkräfte hydraulische Kraftspeicher einzusetzen. Diese können dann beispielsweise als hydraulische Kolben-Zylinder-Anordnungen mit dazu gehörigen Gasdruckspeichern ausgeführt sein, so dass eine Einstellung der Größe der Stützkraft vom Fahrerstand des Feldhäckslers fernbedienbar vorgenommen werden kann. Hierzu kann außerdem eine elektronische Steuereinrichtung vorgesehen sein, die dann den Einstellprozess bei der Regulierung der Größe der Stützkraft in Abhängigkeit von durch die Steuereinrichtung gemessenen Erntegutparametern vornimmt. Eine denkbarer Parameter zur Bestimmung der geeigneten Stützkraft kann in der Größe des durch den Feldhäcksler verarbeiteten Durchsatzes des landwirtschaftlichen Erntegutes gesehen werden.

## Patentansprüche

1. Selbstfahrender Feldhäcksler mit einer am Umfang mit Schneidmessern (12) besetzten, mittels eines Antriebs rotierend antreibbaren Messertrommel (10) und einer der Messertrommel (10) zugeordneten Gegenschneide (14), die in ihrem Abstand zur Arbeitskreisfläche der Schneidmesser (12) der Messertrommel (10) einstellbar ist, mit einem die Messertrommel (10) zumindest teilweise umschließenden Trommelgehäuse (11), welches in einem sich zwischen der Gegenschneide (14) und einem Auswurfkanal (8) erstreckenden, unteren Bereich ein Bodenblech (21) aufweist, dessen Lage zur Arbeitskreisfläche der Schneidmesser (12) veränderbar ist, **dadurch gekennzeichnet, dass** das Bodenblech (21) an seinem der Gegenschneide (14) abgewandten Ende derart in radialer Richtung zur Arbeitskreisfläche der Schneidmesser (12) federnd nachgiebig abgestützt ist, dass durch den erhöhten Druck größerer Massen des Erntegutes das Bodenblech (21) entgegen der Wirkung der federnd nachgiebigen Stützkraft zurückweichen kann und sich somit der Spalt zwischen dem Bodenblech (21) und der Arbeitskreisfläche der Schneidmesser (12) vergrößert.

2. Selbstfahrender Feldhäcksler nach Anspruch 1, **dadurch gekennzeichnet, dass** das Bodenblech (21) in seinem der Gegenschneide (14) zugewandten Bereich an einer Auflageeinrichtung (15) der Gegenschneide (14) gehaltert ist.

3. Selbstfahrender Feldhäcksler nach Anspruch 1 und 2, **dadurch gekennzeichnet, dass** das Bodenblech (21) in seinem der Gegenschneide (14) zugewandten Bereich um eine parallel zur Rotationsachse (13) der Messertrommel (10) ausgerichtete Achse (22) schwenkbar an der Auflageeinrichtung (15) der Gegenschneide (14) gelagert ist.

4. Selbstfahrender Feldhäcksler nach einem der Ansprüche 1 bis 3, **dadurch gekennzeichnet, dass** der Weg, der während der federnd nachgiebigen Bewegung an dem der Gegenschneide (14) abgewandten Ende des Bodenblechs (21) durchlaufen werden kann, begrenzt ist.

5. Selbstfahrender Feldhäcksler nach einem der Ansprüche 1 bis 4, **dadurch gekennzeichnet, dass** die Ausgangsstellung des Bodenblechs (21) an dem der Gegenschneide (14) abgewandten Ende durch eine einstellbare Anschlageinrichtung (29) definiert ist.

6. Selbstfahrender Feldhäcksler nach einem der Ansprüche 1 bis 5, **dadurch gekennzeichnet, dass** zur federnd nachgiebigen Abstützung des Bodenblechs (21) an dem der Gegenschneide abgewandten Ende ein mechanischer Kraftspeicher (27) vorgesehen ist.

7. Selbstfahrender Feldhäcksler nach Anspruch 6, **dadurch gekennzeichnet, dass** der Kraftspeicher (27) als ein Tellerfedern aufweisendes Federpaket (28) ausgebildet ist.

8. Selbstfahrender Feldhäcksler nach einem der Ansprüche 1 bis 5, **dadurch gekennzeichnet, dass** zur federnd nachgiebigen Abstützung des Bodenblechs (21) an dem der Gegenschneide abgewandten Ende ein hydraulischer Kraftspeicher vorgesehen ist.

9. Selbstfahrender Feldhäcksler nach Anspruch 8, **dadurch gekennzeichnet, dass** die Stützkraft des hydraulischen Kraftspeichers durch eine elektronische Steuereinrichtung verstellbar ist.

10. Selbstfahrender Feldhäcksler nach Anspruch 8 und 9, **dadurch gekennzeichnet, dass** die Stützkraft des hydraulischen Kraftspeichers durch eine elektronische Steuereinrichtung in Abhängigkeit von einem durch die Steuereinrichtung erfassten Emtegutparameter einstellbar ist.

11. Selbstfahrender Feldhäcksler nach Anspruch 8 und 9, **dadurch gekennzeichnet, dass** die Stützkraft des hydraulischen Kraftspeichers durch eine elektronische Steuereinrichtung in Abhängigkeit von dem verarbeiteten Erntegutdurchsatz regelbar ist.

## Claims

1. Self-propelled forage harvester having a blade drum (10) which is fitted with cutting blades (12) at the circumference and which can be driven in rotation by means of a drive, and a stationary blade (14) associated with the blade drum (10) whose spacing from the circular working envelope curve of the cutting blades (12) of the blade drum (10) can be set, and having a drum housing (11) which at least partly encloses the blade drum (10) and which has, in a lower region extending between the stationary blade (14) and a discharge passage (8), a bottom plate (21) whose position relative to the circular working envelope curve of the cutting blades (12) can be varied, **characterised in that** the bottom plate (21) is supported at its end remote from the stationary blade (14) to yield resiliently in the radial direction relative to the circular working envelope curve of the cutting blades (12), in such a way that the bottom plate (21) is able to move back in opposition to the action of the resiliently yielding supporting force as a result of the increased pressure from larger masses of the harvested crop, and the gap between the bottom plate (21) and the circular working envelope curve of the cutting blades (12) thus increases in size.

2. Self-propelled forage harvester according to claim 1, **characterised in that**, in its region adjacent the stationary blade (14), the bottom plate (21) is mounted on a means (15) for supporting the stationary blade (14).

3. Self-propelled forage harvester according to claims 1 and 2, **characterised in that**, in its region adjacent the stationary blade (14), the bottom plate (21) is mounted on the means (15) for supporting the stationary blade (14) in such a way as to be pivotable about an axis (22) aligned parallel to the axis of rotation (13) of the blade drum (10).

4. Self-propelled forage harvester according to one of claims 1 to 3, **characterised in that** the distance for which the end of the bottom plate (21) remote from the stationary blade (14) is able to travel during the resiliently yielding movement is limited.

5. Self-propelled forage harvester according to one of claims 1 to 4, **characterised in that** the starting position of the bottom plate (21) at the end remote from the stationary blade (14) is defined by a settable abutment means (29).

6. Self-propelled forage harvester according to one of claims 1 to 5, **characterised in that** a mechanical force-storing means (27) is provided for the resiliently yielding support of the bottom plate (21) at the end remote from the stationary blade.

7. Self-propelled forage harvester according to claim 6, **characterised in that** the force-storing means (27) takes the form of a set (28) of springs comprising disc springs.

8. Self-propelled forage harvester according to one of claims 1 to 5, **characterised in that** a hydraulic force-storing means is provided for the resiliently yielding support of the bottom plate (21) at the end remote from the stationary blade.

9. Self-propelled forage harvester according to claim 8, **characterised in that** the supporting force from the hydraulic force-storing means can be set by an electronic control means.

10. Self-propelled forage harvester according to claims 8 and 9, **characterised in that** the supporting force from the hydraulic force-storing means can be adjusted by an electronic control means as a function of a parameter of the harvested crop which is sensed by the said control means.

11. Self-propelled forage harvester according to claims 8 and 9, **characterised in that** the supporting force from the hydraulic force-storing means can be regulated by an electronic control means as a function of the throughput of the harvested crop which is being processed.

## Revendications

1. Ramasseuse-hacheuse automotrice comportant :
- un tambour porte-couteaux (10) entraîné en rotation par un moyen d'entraînement, et dont la périphérie est garnie de couteaux (12) ainsi qu'un contre-couteau (14) associé au tambour porte-couteaux (10), le contre-couteau étant réglable dans son écartement par rapport à la surface circulaire de travail des couteaux (12) du tambour porte-couteaux (10),
- un carter de tambour (11) qui entoure au moins partiellement le tambour porte-couteaux (10) et comporte une tôle de fond (21) s'étendant dans la zone inférieure, entre le contre-couteau (14) et un canal d'éjection (8), tôle dont la position est réglable par rapport à la surface circulaire de travail des couteaux (12),
**caractérisée en ce que**
la tôle de fond (21) est soutenue de manière élastique, souple, à son extrémité non tournée vers le contre-couteau (14), dans la direction radiale par rapport à la surface circulaire active des couteaux (12) pour que l'augmentation de la poussée exercée par des masses importantes de produits de récolte, permette à tôle de fond (21) de s'échapper contre l'action de la force d'appui élastique souple et ainsi d'augmenter l'intervalle compris entre la tôle de fond (21) et la surface circulaire de travail des couteaux (12).

2. Ramasseuse-hacheuse automotrice selon la revendication 1,
**caractérisée en ce que**
la tôle de fond (21) est tenue contre une installation d'appui (15) du contre-couteau (14) dans sa zone tournée vers le contre-couteau (14).

3. Ramasseuse-hacheuse automotrice selon les revendications 1 et 2,
**caractérisée en ce que**
la tôle de fond (21) est montée dans sa zone tournée vers le contre-couteau (14), de manière pivotante autour d'un axe (22) parallèle à l'axe de rotation (13) du tambour porte-couteaux (10), cet axe étant monté dans l'installation de palier (15) du contre-couteau (14).

4. Ramasseuse-hacheuse automotrice selon les revendications 1 à 3,
**caractérisée en ce que**
le trajet qui peut être parcouru pendant le mouvement d'échappement élastique souple à l'extrémité de la tôle de fond (21) opposée au contre-couteau (14) est limité.

5. Ramasseuse-hacheuse automotrice selon les revendications 1 à 4,
**caractérisée en ce que**
la position de repos de la tôle de fond (21) à l'extrémité opposée à celle du contre-couteau (14), est définie par une installation de butée réglable (29).

6. Ramasseuse-hacheuse automotrice selon les revendications 1 à 5,
**caractérisée en ce que**
pour le support élastique, souple, de la tôle de fond (21) l'extrémité non tournée vers le contre-couteau comporte un accumulateur de force (27) mécanique.

7. Ramasseuse-hacheuse automotrice selon la revendication 6,
**caractérisée en ce que**
l'accumulateur de force (27) est réalisé sous la forme d'un paquet de ressorts (28) comprenant des ressorts Belleville.

8. Ramasseuse-hacheuse automotrice selon les revendications 1 à 5,
**caractérisée en ce que**
un accumulateur de force hydraulique est prévu pour le support élastique, souple, de la tôle de fond (21) à l'extrémité opposée au contre-couteau.

9. Ramasseuse-hacheuse automotrice selon la revendication 8,
**caractérisée en ce que**
la force d'appui de l'accumulateur de force hydraulique est préréglée par une installation de commande électronique.

10. Ramasseuse-hacheuse automotrice selon les revendications 8 et 9,
**caractérisée en ce que**
la force d'appui de l'accumulateur hydraulique de force est réglable par une installation de commande électronique en fonction d'un paramètre de qualité de récolte saisi par l'installation de commande.

11. Ramasseuse-hacheuse automotrice selon les revendications 8 et 9,
**caractérisée en ce que**
la force d'appui de l'accumulateur de force hydraulique est réglée par une installation de commande électronique en fonction du débit de produits de récolte traités.
